# EUROPÄISCHE PATENTSCHRIFT

(11) **EP 0 472 676 B1**
(45) Veröffentlichungstag und Bekanntmachung des Hinweises auf die Patenterteilung: **02.11.1995**
(21) Anmeldenummer: 91903205.2
(22) Anmeldetag: 15.02.1991
(51) Int. Cl.: G02B 6/42

(54) **SIGNALÜBERTRAGUNGSLEITUNG**
SIGNAL TRANSMISSION LINE
CABLE DE TRANSMISSION DE SIGNAUX

(30) Priorität: 17.02.1990 DE 4005141
(43) Veröffentlichungstag der Anmeldung: 04.03.1992
(73) Patentinhaber: Stribel GmbH, D-72636 Frickenhausen (DE)
(72) Erfinder: DRISSLER, Friedrich, D-7000 Stuttgart 1 (DE)
(74) Vertreter: Hoeger, Stellrecht & Partner
(86) Internationale Anmeldenummer: EP9100299
(87) Internationale Veröffentlichungsnummer: WO9112549

(56) Entgegenhaltungen:
- EP-A- 0 336 167
- DD-A- 200 965
- DD-A- 246 405
- DE-A- 3 109 888
- DE-C- 3 113 168
- US-A- 4 733 934

## Beschreibung

Die Erfindung betrifft eine optoelektronisch arbeitende Signalübertragungsleitung zur Übertragung von beispielsweise Steuer-, Regel- und Überwachungssignalen zwischen Einheiten einer technischen Einrichtung, umfassend ein von den Einheiten lösbares Anschlußelement, das von diesen Einheiten lösbare elektrische Anschlüsse aufweist, welche zum Herstellen einer lösbaren Verbindung zwischen der Signalübertragungsleitung und einer der Einheiten dient, einen von diesem Anschlußelement wegführenden Lichtwellenleiter zur optischen Informationsübertragung, welcher einzeln oder als Faserbündel lichtdicht ummantelt ist, eine im Anschlußelement zwischen dem elektrischen Anschlup und dem Lichtwellenleiter angeordnete Transformationseinheit zum Umsetzen von elektrischen Signalen in optische Signale und umgekehrt, wobei das Anschlußelement den elektrischen Anschluß, die Transformationseinheit und den Lichtwellenleiter fest miteinander verbunden hält.

Bei den bisher bekannten optischen Signalübertragungsleitungen waren die einzelnen Einheiten der technischen Einrichtung mit einem Lichtabgabeteil und/oder einem Lichtempfangsteil versehen, und die Übertragung der Signale zwischen den einzelnen Einheiten erfolgte optisch mittels des Lichtwellenleiters als Übertragungsteil. In diesem Fall mußte der Lichtwellenleiter über lösbare Anschlußelemente mit den Einheiten verbunden werden.

Derartige bekannte Anschlußelemente für eine lösbare Verbindung eines Lichtwellenleiters mit einer der Einheiten, in welcher ein Lichtabgabeteil und/oder ein Lichtempfangsteil eingebaut ist, sind jedoch für verschiedene Anwendungen nicht geeignet, da diese Anschlußelemente für die Lichtwellenleiter aufgrund ihrer mechanischen Eigenschaften unter Betriebsbedingungen mit mechanischen Dauerbeanspruchungen zur Brüchigkeit und zur Verschlechterung der optischen Ankopplung neigen oder auch durch chemische Umwelteinwirkungen beeinträchtigt werden, so daß die optischen Eigenschaften, das heipt die Qualität der optischen Kopplung, vermindert wird und eine dauerhaft einwandfreie Funktion ausgeschlossen ist.

Eine Signalübertragungsleitung mit den eingangs genannten Merkmalen ist in der DE-A 31 09 888 offenbart, welche einen Stecker zeigt, in welchem die elektrischen Anschlußelemente und der Lichtwellenleiter durch Vergießen fixiert sind, wobei der Lichtwellenleiter aus dem Stecker herausverläuft und jeder Lichtwellenleiter zwar eine Umhüllung aufweist, die jedoch am Steckerkörper endet.

Die DE-A 31 09 888 offenbart somit eine konventionelle Kombination von Steckerkontakten, Transformationseinheit und Lichtleiter.

Der Erfindung liegt daher die Aufgabe zugrunde, verschiedene Einheiten einer technischen Einrichtung optisch miteinander zu koppeln, um die Vorteile der optischen Signalübertragung, insbesondere deren Einstreusicherheit, ausnützen zu können, jedoch andererseits lösbare Anschlußelemente zu schaffen, die die vorstehend genannten Nachteile der bekannten lösbaren Anschlußelemente für Lichtwellenleiter nicht aufweisen.

Diese Aufgabe wird durch eine optische Signalübertragungsleitung der eingangs beschriebenen Art erfindungsgemäß dadurch gelöst, daß der Lichtwellenleiter ein polymerer Lichtwellenleiter ist und daß der Lichtwellenleiter und die in dem Anschlußelement angeordnete Transformationseinheit sowie die elektrischen Anschlüsse in einer gemeinsamen hermetischen Umhüllung aus licht-, gas-, dampf- und flüssigkeitsdichtem, gummi- oder zähelastischem Material vibrationsfest gelagert sind. Weitere vorteilhafte Ausführungsformen sind Gegenstand der Unteransprüche.

Die Signalübertragungsleitung arbeitet somit optoelektronisch, wobei das von den Einheiten lösbare Anschlußelement einen lösbaren elektrischen Anschlup aufweist, welcher zum Herstellen einer lösbaren Verbindung der Signalübertragungsleitung mit einer der Einheiten dient, und das Anschlußelement weist eine zwischen dem elektrischen Anschluß und dem Lichtwellenleiter angeordnete Transformationseinheit zum Umsetzen von elektrischen in optische Signale und umgekehrt auf, wobei das Anschlußelement den elektrischen Anschluß, die Transformationseinheit und den Lichtwellenleiter fest oder unlösbar miteinander verbunden hält.

Durch die erfindungsgemäße Lösung wird somit erreicht, daß die lösbare Verbindung zwischen den Einheiten über elektrische Anschlüsse erfolgt, die die Nachteile der optischen Anschlußelemente nicht aufweisen und von denen vielfältige, alle vorstehend genannten Anforderungen erfüllende Varianten allgemein bekannt sind, und daß die Umsetzung elektrischer Signale in optische Signale, nicht wie beim Stand der Technik bereits in den jeweiligen Einheiten vor der lösbaren Verbindung erfolgt, sondern in der Signalübertragungsleitung nach der lösbaren Verbindung mit den Einheiten, so daß eine problemlose dauerhafte Verbindung zwischen dem Lichtwellenleiter und der Transformationseinheit geschaffen werden kann, die auch nicht lösbar gestaltet sein muß.

Bei einer erfindungsgemäßen technischen Einrichtung kann es sich beispielsweise um ein Kraftfahrzeug handeln, es ist jedoch jede andere Art eines Systems denkbar, bei welchem mehrere Einheiten miteinander zu verbinden sind und eine gegenseitige Steuerung, Regelung oder Überwachung erforderlich ist. Eine Möglichkeit, diese Einheiten auszubilden, wäre die, daß diese bei einem Kraftfahrzeug, beispielsweise Verbraucher, wie insbesondere Stelleinrichtungen, sind. Die Einheiten können aber auch Sensoren sein.

Bei den erfindungsgemäßen lösbaren Anschlüssen handelt es sich um-elektrische Stecker oder Steckbuchsen, es ist aber auch jede andere Art lösbarer elektrischer Anschlüsse denkbar.

Bei der vorliegenden Erfindung erfolgt die Übertragung der optischen Signale über einen Lichtwellenleiter. Dieser Lichtwellenleiter kann ein Glasfaserlichtwellenleiter sein. Noch vorteilhafter ist es jedoch, wenn dieser Lichtwellenleiter ein polymerer Lichtwellenleiter ist, da dieser weniger spröde ist und sich dabei als flexibles Element der Signalübertragungsleitung noch besser eignet, insbesondere bei der Signalübertragung in Kraftfahrzeugen.

Die Transformationseinheit umfaßt vorzugsweise ein Lichtabgabe- oder Lichtempfangsteil, wobei das Lichtabgabeteil eine Leuchtdiode oder ein Halbleiterlaser oder jedes andere optisch strahlende Bauelement sein kann, während für das Lichtempfangsteil beispielsweise eine Photodiode Verwendung findet.

Das Anschlußelement ist vorzugsweise so ausgebildet, daß es eine Umhüllung aufweist, die die Verbindungen zwischen den elektrischen Anschlüssen der Transformationseinheit und dem Lichtwellenleiter hermetisch umschließt, so daß die Verbindung zwischen dem Lichtwellenleiter und der Transformationseinheit sowie zwischen der Transformationseinheit und den elektrischen Anschlüssen äußeren Einwirkungen nicht ausgesetzt ist.

Eine bevorzugte Ausführungsform sieht dabei vor, daß die optische Signalübertragungsleitung für eine Signalübertragung ein Lichtabgabeteil, ein Übertragungsteil und ein Lichtempfangsteil sowie Anschlüsse für elektrische Leiter aufweist, wobei der Übertragungsteil einen polymeren Lichtwellenleiter mit an den Enden vorgesehenen Kupplungsteilen aufweist und der polymere Lichtwellenleiter die in den Kupplungsteilen vorgesehenen Lichtabgabe- und Lichtempfangsteile sowie die Anschlüsse fibrationsfest in einer hermetischen Umhüllung licht-, gas-, dampf- und flüssigkeitsdicht gelagert sind.

Insbesondere ist die optische Signalübertragungsleitung so ausgebildet, daß sie zwei Kupplungsteile und ein dazwischen liegendes flexibles Übertragungsteil aufweist.

Weitere vorteilhafte Ausgestaltungen sind Gegenstand der Unteransprüche.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: ein Kupplungsteil der erfindungsgemäßen Einrichtung mit einem Lichtabgabeteil, einem Übertragungsteil und elektrischen Anschlüssen in geschnittener Seitenansicht;
- Fig. 2: ein Kupplungsteil ähnlich Fig. 1, jedoch mit einem Lichtempfangsteil;
- Fig. 3: ein Kupplungsteil ähnlich Fig. 1, jedoch mit mehreren Lichtabgabeteilen für optische Signale unterschiedlicher Wellenlänge;
- Fig. 4: ein Kupplungsteil ähnlich Fig. 2, jedoch mit mehreren Lichtempfangsteilen für optische Signale unterschiedlicher Wellenlänge;
- Fig. 5: ein Kupplungsteil ähnlich Fig. 1 und 2, jedoch mit einem Lichtabgabe- und einem Lichtempfangsteil und
- Fig. 6: ein Kupplungsteil ähnlich den Fig. 3 und 4, jedoch mit mehreren Lichtabgabe- und Lichtempfangsteilen für optische Signale unterschiedlicher Wellenlänge.

Die in der Zeichnung dargestellten erfindungsgemäßen Kupplungsteile 1 bis 6 mit einem sich daran anschließenden Übertragungsteil 8, sind für die Übertragung optoelektronischer Signale vorgesehen und können insbesondere zur Steuerung, Regelung und Überwachung der elektrischen Verbraucher in technischen Einrichtungen, insbesondere in Kraftfahrzeugen, angewendet werden, wo extreme mechanische Beanspruchungen, wie Schwingungen und Vibrationen, und extreme Umwelteinwirkungen, wie starke Temperaturwechselbeanspruchungen, Dampf, Wasser, Vereisung, Sonneneinstrahlung, chemische Gase, Dämpfe und Flüssigkeiten von Kraft- und Schmierstoffen, auftreten, beziehungsweise einwirken können.

Dazu weisen die Kupplungsteile 1 bis 6 eine äußere Umhüllung 7 auf, die so ausgelegt ist, daß sie die elektrischen beziehungsweise elektronischen und optischen Bauelemente hermetisch umschließt und gegen die äuperen schädigenden Einwirkungen dauerhaft schützt. Für die Übermittlung der Signale können in dem Übertragungsteil 8, das ebenso wie die eigentlichen Kupplungsteile 1 bis 6 eine hermetische Umhüllung 7 aufweist, ein oder mehrere Lichtwellenleiter 9 vorgesehen sein, die aus einem polymeren Material bestehen, das sowohl einen für die Signalübertragung hohen optischen Wirkungsgrad (verlustarme Totalreflektion) als auch eine hohe Dauerelastizität beziehungsweise Dauerflexibilität besitzt, so daß insgesamt eine hohe Übertragungsleistung und Widerstandsfähigkeit gegen Vibrationen und dergleichen gegeben und somit eine zuverlässige Dauerfunktionstüchtigkeit gewährleistet ist. Bei einer Verwendung von mehreren Lichtwellenleitern 9 im Übertragungsteil 8 kann es günstig sein, jeden einzelnen Lichtwellenleiter 9 mit einer lichtdichten Ummantelung 10 zu umgeben, die eine gegenseitige Beeinflussung der Signalübertragung verhindert.

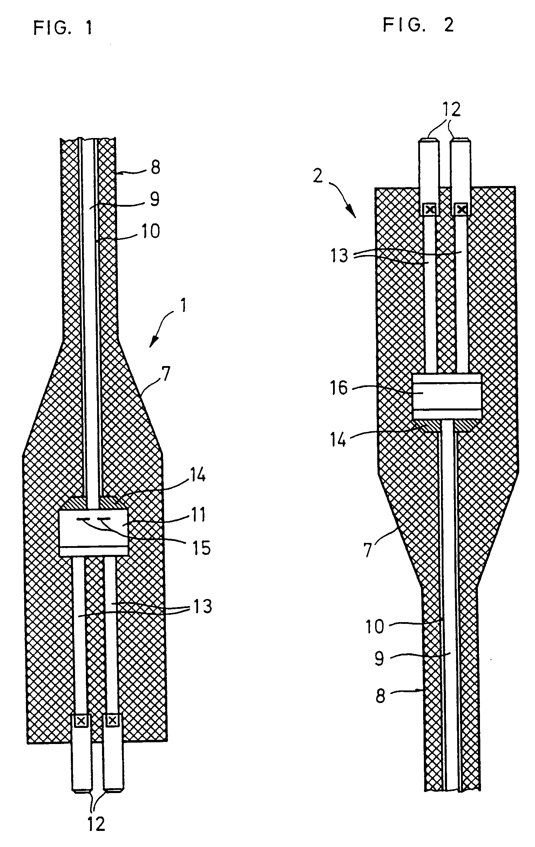

Der in Fig. 1 dargestellte Kupplungsteil 1 weist einen Lichtabgabeteil 11 auf, das in der Unmhüllung 7 hermetisch dicht eingebettet ist und als Leucht- oder Laserdiode ausgebildet sein kann. An dem einen Ende des Kupplungsteils 1 sind zwei elektrische Anschlüsse 12 vorgesehen, die mit einem Teil in der Umhüllung 7 hermetisch dicht gelagert sind und mit einem anderen aus der Umhüllung 7 herausragen können. Entsprechend der Darstellung können die elektrischen Anschlüsse zweckmäßig als Steckerzungen ausgebildet sein. Die Steckerzungen können bevorzugt einen flachrechteckförmigen Querschnitt aufweisen.

Es liegt jedoch auch im Rahmen der Erfindung, die Steckerzungen im Querschnitt anders, zum Beispiel rund oder dreieckig, auszubilden. Es liegt außerdem im Rahmen der Erfindung, die elektrischen Anschlüsse als Steckerbuchsen auszubilden, die ebenfalls einen flachrechteckförmigen, runden oder anderweitigen Querschnitt haben können, wobei die Steckerbuchsen so wie die Steckerzungen teilweise aus dem Kupplungsteil 1 herausragen oder mit ihrer gesamten Länge innerhalb des Kupplungsteils 1 gelagert sein können.

Die Anschlußverbindung kann hinsichtlich ihrer äußeren Formgebung in einer Weise ausgebildet sein, die verhindert, daß das Lichtwellenübertragungskabel in falscher Weise bzw. in einen falschen Anschlup eingesteckt werden kann.

Zwischen den elektrischen Anschlüssen 12 und dem Lichtabgabeteil 11 sind elektrische Leiter 13 vorgesehen, deren Enden mit den vorgenannten Elementen fest verbunden und in der Umhüllung 7 hermetisch dicht eingebettet sind.

Es liegt auch im Rahmen der Erfindung, die elektrischen Anschlüsse 12 anders anzuordnen, so daß sie zum Beispiel quer zur Längsrichtung des Kupplungsteils 1 liegen und nicht an der Stirnseite, sondern beispielsweise an einer Längsseite heraustreten. Dies ist selbstverständlich auch bei den anderen Kupplungsteilen der Fig. 2 bis 6 möglich.

An der den elektrischen Anschlüssen gegenüberliegenden Seite des Lichtabgabeteils 11 kann das Ende des Lichtwellenleiters 9 beispielsweise durch Verschweißen oder Kleben 14 befestigt sein. Das von der lichtemittiertenden Fläche 15 des Lichtabgabeteils 11 abstrahlende Licht wird auf diese Weise in den bevorzugt aus polymerem Material bestehenden Lichtwellenleiter 9 eingekoppelt.

Der in Fig. 2 dargestellte Kupplungsteil 2 stellt das andere Ende der erfindungsgemäßen optoelektronischen Einrichtung dar, wobei entgegen der zeichnerischen Darstellung das Übertragungsteil 8 zwischen dem Kupplungsteil 1 und dem Kupplungsteil 2 selbstverständlich nicht unterbrochen ist. Das Kupplungsteil 2 ist im wesentlichen genauso wie das Kupplungsteil 1 aufgebaut, jedoch mit dem Unterschied, daß statt des Lichtabgabeteils 11 ein Lichtempfangsteil 16 vorgesehen ist. Dieser Lichtempfangsteil 16 kann bevorzugt eine Photodiode sein. Der Lichtwellenleiter 9 kann ebenso wie beim Kupplungsteil 1 mittels Verschweißen oder Kleben 14 an der den elektrischen Anschlüssen 12 abgewandten Fläche des Lichtempfangsteils 16 befestigt sein.

Die gesamte optoelektronische Signalübertragungsleitung gemäß Fig. 1 und 2, bestehend aus dem lichtabgebenden Kupplungsteil 1, dem lichtempfangenden Kupplungsteil 2 und dem Lichtübertragungsteil 8, ist insgesamt mit der Umhüllung 7 licht-, gas-, dampf- und Flüssigkeitsdicht so umgeben, daß die optischen, optoelektronischen und mechanischen Bauelemente fest und sicher gelagert sind, so daß trotz äußerer Umwelteinwirkungen und äußerer mechanischer Vibrationsbeanspruchungen und dergleichen eine zuverlässige Funktionstüchtigkeit dauerhaft gewährleistet ist. Die Umhüllung 7 kann vorzugsweise aus einem gummi- oder zähelastischen Material, insbesondere Kunststoffmaterial, bestehen, das gegen die vorgenannten Umwelteinwirkungen resistent ist, wobei es auch günstig sein kann, die Umhüllung 7 im Bereich des Übertragungsteils 8 elastischer auszubilden als bei den Kupplungsteilen 1 bis 6. Die elektrischen Anschlüsse 12 der Kupplungsteile 1 bis 6 können zudem so angeordnet sein, daß die Kupplungsteile selbst nur in einer ganz bestimmten Position eingesteckt werden können, so daß ein falscher Anschlup mit Sicherheit vermieden ist.

Für die Signalübertragung mittels der optoelektronischen Signalübertragungsleitung gemäß den Fig. 1 und 2 kann beispielsweise Dauerlicht verwendet werden. Je nach Erfordernis ist es jedoch auch möglich, Licht einer speziellen Wellenlänge oder im digitalen Betrieb gepulstes Licht mit einer speziellen Codierung und/oder einer bestimmten Wellenlänge (Farbe) zu benutzen.

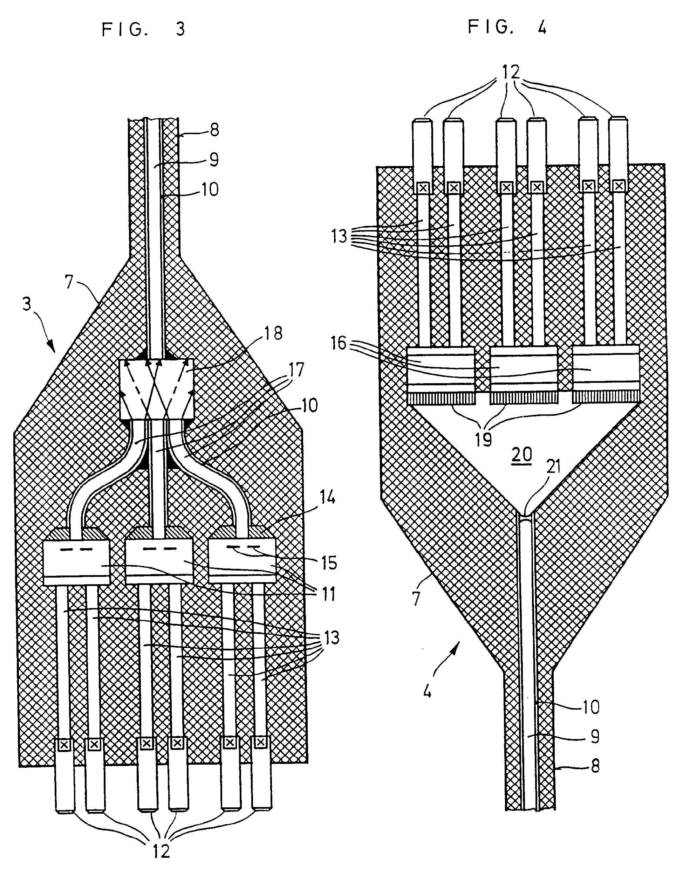

Die optoelektronische Signalübertragungsleitung gemäp dem Ausführungsbeispiel der Fig. 3 und 4 weist ein Kupplungsteil 3 (Fig. 3) und ein Kupplungsteil 4 (Fig. 4) auf, die über das unterbrochen dargestellte Übertragungsteil 8 verbunden sein können. In dem Kupplungsteil 3 befinden sich drei Lichtabgabeteile 11, die bevorzugt nebeneinander angeordnet sein können. Es ist auch möglich, weniger oder mehr Lichtabgabeteile 11 in dem Kupplungsteil 3 vorzusehen. Die Lichtabgabteile 11 können unterschiedliche Lichtwellenlängen emittieren. Dabei kann es sich um Lichtquellen verschiedener Farbe aber auch um Lichtquellen mit kontinuierlichem spektralem Verlauf handeln, die mit bestimmten Filtern versehen sein können. An der den an der Stirnseite des Kupplungsteils 3 herausgeführten elektrischen Anschlüssen 12 gegenüberliegenden Seite der drei Lichtabgabeteile 11 können Lichtwellenleiterzwischenstücke 17 angeordnet sein, deren Enden an den Flächen der Lichtabgabeteile 11 durch Verschweißen oder Kleben 14 befestigt sein können. Die Lichtwellenleiterzwischenstücke 17 können mit ihren anderen Enden an einem optischen Kopplungselement 18, das beispielsweise als Mischerplättchen ausgebildet ist, so angeordnet sein, daß die Lichtsignale in eine oder mehrere optische Fasern bzw. Lichtwellenleiter 9 eingekoppelt werden.

Der andere Kupplungsteil 4 weist gemäß Fig. 4 drei Lichtempfangsteile 16 auf, die bevorzugt nebeneinander angeordnet sein können. Die vorzugsweise als Photodioden ausgebildeten Lichtempfangsteile 16 können an der dem Lichtwellenleiter 9 zugewandten Seite optische Filter 19 besitzen, die für jeden einzelnen Photodetektor den korrekten Emnpfang der Lichtsignale gewährleisten.

Die optischen Filter 19 der Lichtempfangsteile 16 können an der erweiterten Seite eines etwa trichterförmig ausgebildeten Lichtverteilungsraumes 20 vorgesehen sein, der sich in Richtung zu dem lichtabstrahlenden Ende des polymeren Lichtwellenleiters 9 hin verjüngt. Im Bereich dieser Verjüngung des trichterförmigen Raumes 20 kann am lichtabstrahlenden Ende des Lichtwellenleiters 9 ein z.B. als Linse 21 ausgebildetes optisches Element vorgesehen sein. Mittels der Linse 21 kann das vom Kupplungsteil 3 zum Kupplungsteil 4 übertragene Licht in geeigneter Weise so aufgeweitet werden, daß eine einwandfreie Funktion sämtlicher Lichtempfangsteile 16 innerhalb des Kupplungsteils 4 gewährleistet ist. Gemäß einer anderen nicht dargestellten bevorzugten Ausführungsform des Kupplungsteils 4 ist es auch möglich, die Wellenlängenzusammensetzung des ankommenden Lichts durch ein beispielsweise als Prisma ausgebildetes optisches Bauelement räumlich so aufzuteilen, daß das Licht auf diese Weise entweder direkt oder über Lichtwellenleiterzwischenstücke einer bestimmten Photodiode 16 zugeführt wird.

Die Sende- und Empfangskupplungsteile 3, 4 sowie der Übertragungsteil 8 der optoelektronischen Einrichtung können ebenso wie die Einrichtung gemäß Fig. 1 und 2 durchgehend von einer licht-, gas-, dampf - und flüssigkeitsdichten Umhüllung 7 umfaßt sein, welche den polymeren Lichtwellenleiter 9 und die Bauelemente 10 bis 21 zuverlässig gegen äußere Einwirkungen schützt. Ebenso können die Kupplungsteile 3, 4 mit den herausragenden Anschlußsteckern 12 so gestaltet sein, daß sie ausschließlich in der einen richtigen Position eingesteckt werden können, wodurch eine Fehlschaltung verhindert ist.

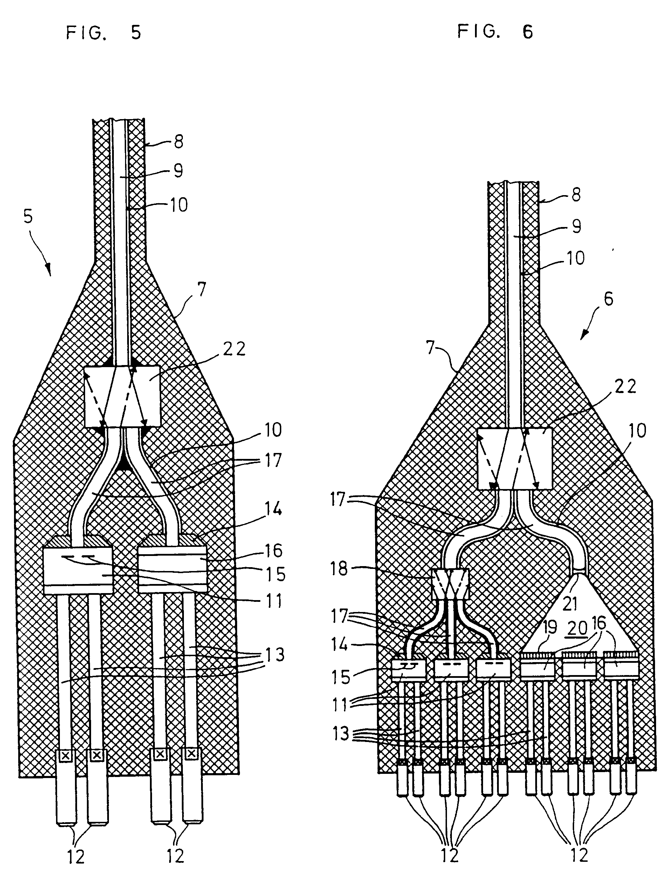

Das Kupplungsteil 5 gemäß Fig. 5 stellt eine weitere bevorzugte Ausführungsform dar und ist Teil einer optoelektronischen Einrichtung, die aus zwei solcher Kupplungsteile 5 besteht, die über den Übertragungsteil 8 miteinander verbunden sind. Das heißt, daß die optoelektronische Einrichtung an beiden Enden des Übertragungsteils 8 gleiche Kupplungsteile 5 aufweist, die so ausgebildet sind, daß die Signale bidirektional übertragen werden können. Dafür ist in dem Kupplungsteil 5 mindestens ein Lichtabgabeteil 11, vorzugsweise eine Leucht- oder Laserdiode, und mindestens ein Lichtempfangsteil 16, vorzugsweise eine Photodiode, vorgesehen. Außerdem befindet sich in dem Kupplungsteil 5 ein optisches Mischerteil 22. Zwischen dem Mischerteil 22 und dem Lichtabgabeteil 11 befindet sich ein Lichtwellenleiterzwischenstück 17, das an dem Lichtabgabeteil 11 durch Verschweißen oder Kleben 14 befestigt sein kann. Ein zweites Lichtwellenleiterzwischenstück 17 ist zwischen dem Mischerteil 22 und dem Lichtempfangsteil 16 angeordnet, wobei das Ende dieses Lichtwellenleiterzwischenstücks ebenfalls durch Verschweißen oder Kleben 14 mit dem Lichtempfangsteil 16 verbunden ist. Der Mischerteil 22 bewirkt, daß das von dem Lichtabgabeteil 11 ausgesandte Licht in den Lichtübertragungsteil 8 eingekoppelt wird und daß gleichzeitig die ankommenden Signale den Lichtempfangsteil 16 erreichen. Dabei wird von der dem Lichtwellenleiter 9 und den Lichtwellenleiterzwischenstücken 17 eigenen numerischen Apertur Gebrauch gemacht.

Die Lichtwellenleiterzwischenstücke 17 können ebenso wie der Lichtwellenleiter 9 von einer Ummantelung 10 umgeben sein, um gegenseitige Beeinflussungen auszuschließen. Andere Formen der optischen Kopplung zwischen dem Lichtübertragungsteil 8 sowie dem Lichtabgabeteil 11 und dem Lichtempfangsteil 16 sind durch modifizierte Konstruktionen ebenfalls möglich und liegen im Rahmen der Erfindung.

Der Kupplungsteil 5 kann bezüglich der Anschlußstecker 12 zweckmäßig auch so gestaltet sein, daß eine Verwechslung ausgeschlossen und stets die richtige Steckkontaktierung gewährleistet ist.

Die hermetische Umhüllung 7 stellt sicher, daß die optischen, optoelektronischen und elektrischen Bauelemente des Kupplungsteils 5 gegen schädigende äußere Einflüsse geschützt und innerhalb der Umhüllung 7 so gelagert sind, daß ihre mechanische Halterung eine sichere Funktion gewährleisten.

Eine weitere bevorzugte Ausführungsform für eine bidirektionale Übertragung von Informationen ist durch den in Fig. 6 dargestellten Kupplungsteil 6 gegeben. Der Kupplungsteil 6 beinhaltet in der hermetisch dichten Umhüllung 7 drei Lichtabgabeteile 11 und drei Lichtempfangsteile 16, wobei es im Rahmen der Erfindung selbstverständlich auch möglich ist, weniger oder mehr Lichtabgabeteile 11 und Lichtempfangsteile 16 vorzusehen. Zur korrekten Übertragung der Signale befinden sich in dem Kupplungsteil 6 zudem ein beispielsweise als Mischerteil 22 ausgebildetes optisches Kopplungselement, an dem der Lichtwellenleiter 9 angeschlossen ist. Auf der dem Lichtwellenleiter 9 gegenüberliegenden Seite des Mischerteils 22 sind zwei Lichtwellenleiterzwischenstücke 17 angeschlossen, von denen der eine in einen bevorzugt trichterförmigen Raum 20 mündet, wobei an der Mündungsstelle eine Linse 21 vorgesehen sein kann. Die den Raum 20 mitbegrenzenden Lichtempfangsteile 16 können unterschiedliche optische Filter 19 aufweisen.

Das andere am Mischerteil 22 angeschlossene Lichtwellenleiterzwischenstück 17 ist an der einen Seite eines optischen Kopplungselements 18 angeschlossen. An der gegenüberliegenden Seite des Kopplungselementes 18 können drei weitere Wellenleiterzwischenstücke 17 angeschlossen sein, die mit den drei Lichtabgabeteilen 11 an der lichtemittierenden Fläche 15 mittels Verschweißen oder Kleben 14 angeschlossen sein können. Des weiteren sind an den Lichtabgabeteilen 11 und Lichtempfangsteilen 16 elektrische Leiter 13 angeordnet, die zu den an der Stirnseite des Kupplungselements 6 herausragenden elektrischen Anschlupsteckern 12 führen. Die komplette optoelektronische Einrichtung der zuletzt beschriebenen Art weist zwei gleiche Kupplungsteile 6 auf, die über den Lichtübertragungsteil 8 verbunden sind. Sowohl die Kupplungsteile 6 als auch das Übertragungsteil 8 sind durchgehend von der aus einem licht-, gas-, dampf- und flüssigkeitsdichten Material bzw. Materialkombinationen gebildeten Umhüllung 7 hermetisch dicht umschlossen, so daß die optoelektronischen Bauteile in den Kupplungsteilen 6 und dem Übertragungsteil 8 optimal geschützt sind. Die innere Form der Umhüllung 7 stellt sicher, daß sämtliche optoelektronischen Bauelemente für eine dauerhaft einwandfreie Funktion sicher eingebettet sind.

Ein wesentlicher Vorteil der erfindungsgemäßen Einrichtung besteht darin, daß sie auch bei Fahrzeugen, insbesondere Kraftfahrzeugen, verwendbar ist, um Informationen unter den hier gegebenen Bedingungen mit polymeren Lichtwellenleitern zu übertragen. Außerdem ermöglichen die beschriebenen optoelektronischen Kupplungsteile 1 bis 6 mit den Übertragungsteilen 8 den Einsatz polymerer Lichtwellenleiter 9 zur Informationsübermittlung speziell in Umgebungen, in denen aggressive äußere Einwirkungen, insbesondere chemischer Art, vorherrschen, die bei den bekannten optoelektronischen Einrichtungen zu einer Schädigung der für die Übertragung vorgesehenen Bauelemente führen.

## Patentansprüche

1. Optoelektronisch arbeitende Signalübertragungsleitung zur Übertragung von beispielsweise Steuer-, Regel- und Überwachungssignalen zwischen Einheiten einer technischen Einrichtung, umfassend ein von den Einheiten lösbares Anschlußelement (1 bis 6) das von diesen Einheiten lösbare elektrische Anschlüsse (12) aufweist, welche zum Herstellen einer lösbaren Verbindung zwischen der Signalübertragungsleitung und einer der Einheiten dient, einen von diesem Anschlupelement wegführenden Lichtwellenleiter zur optischen Informationsübertragung, welcher einzeln oder als Faserbündel lichtdicht ummantelt ist, eine im Anschlußelement (1 bis 6) zwischen dem elektrischen Anschluß (12) und dem Lichtwellenleiter (9) angeordnete Transformationseinheit (11, 16) zum Umsetzen von elektrischen Signalen in optische Signale und umgekehrt, wobei das Anschlußelement (1 bis 6) den elektrischen Anschlup (12), die Transformationseinheit (11, 16) und den Lichtwellenleiter (9) fest miteinander verbunden hält,
**dadurch gekennzeichnet**, daß der Lichtwellenleiter ein polymerer Lichtwellenleiter (9) ist und daß der Lichtwellenleiter (9) und die in dem Anschlußelement (1 bis 6) angeordnete Transformationseinheit (11, 16) sowie die elektrischen Anschlüsse (12) in einer gemeinsamen hermetischen Umhüllung (7) aus licht-, gas-, dampf- und flüssigkeitsdichtem, gummi- oder zähelastischem Material vibrationsfest gelagert sind.

2. Signalübertragungsleitung nach Anspruch 1, dadurch gekennzeichnet, daß die elektrischen Anschlüsse als elektrische Steckerstifte (12) oder Steckbuchsen ausgebildet sind.

3. Signalübertragungsleitung nach einem der voranstehenden Ansprüche, dadurch gekennzeichnet, daß die Transformationseinheit ein Lichtabgabeteil (11) und/oder ein Lichtempfangsteil (16) umfaßt.

4. Signalübertragungsleitung nach einem der voranstehenden Ansprüche, dadurch gekennzeichnet, daß zwischen den elektrischen Anschlüssen (12) und der Transformationseinheit (11, 16) elektrische Leiter (13) vorgesehen sind, deren Enden mit den vorgenannten Elementen fest verbunden und in der Umhüllung hermetisch dicht eingebettet sind.

5. Signalübertragungsleitung nach einem der voranstehenden Ansprüche, dadurch gekennzeichnet, daß das Anschlußelement als elektrisches Kupplungsteil (1 bis 6) ausgebildet ist.

6. Signalübertragungsleitung nach einem der voranstehenden Ansprüche, dadurch gekennzeichnet, daß die elektrischen Anschlüsse (12) aus der hermetisch dichten Umhüllung (7) herausgeführt und als im Querschnitt bevorzugt flach rechteckförmige Steckerzungen und/oder Steckerbuchsen ausgebildet sind.

7. Signalübertragungsleitung nach einem der voranstehenden Ansprüche, dadurch gekennzeichnet, daß die Signalübertragungsleitung zwei oder mehr Lichtwellenleiter (9) aufweist.

8. Signalübertragungsleitung nach einem der voranstehenden Ansprüche, dadurch gekennzeichnet, daß die Signalübertragungsleitung mit zwei Kupplungsteilen (1 bis 6) versehen ist und daß das Lichtabgabeteil (11) in dem einen Kupplungsteil (1, 3) an einem Ende des Übertragungsteils (8) und das Lichtempfangsteil (16) in dem Kupplungsteil (2, 4) am anderen Ende der Signalübertragungsleitung angeordnet ist.

9. Signalübertragungsleitung nach Anspruch 8, dadurch gekennzeichnet, daß in den beiden Kupplungsteilen (1, 2) je ein Lichtabgabeteil (11) und ein Lichtempfangsteil (16) angeordnet sind.

10. Signalübertragungsleitung nach einem der voranstehenden Ansprüche, dadurch gekennzeichnet, daß in dem Anschlußelement (5) ein Mischerteil (22) angeordnet ist, an welchem der Lichtwellenleiter (9) und ein mit dem Lichtabgabeteil (11) sowie ein mit dem Lichtempfangsteil (16) verbundenes Lichtwellenleiterzwischenstück (17) angeschlossen sind.

11. Signalübertragungsleitung nach einem der voranstehenden Ansprüche, dadurch gekennzeichnet, daß in dem Anschlupelement zwei oder mehr Lichtabgabeteile (11) mit je einem zu dem mit dem Lichtwellenleiter (9) verbundenen Mischerteil (22) führenden Lichtwellenleiterzwischenstück (17) vorgesehen sind.

12. Signalübertragungsleitung nach einem der voranstehenden Ansprüche, dadurch gekennzeichnet, daß in dem Anschlußelement (4) zwei oder mehr Lichtempfangsteile (16) angeordnet sind.

13. Signalübertragungsleitung nach einem der voranstehenden Ansprüche, dadurch gekennzeichnet, daß zwischen dem Licht abstrahlenden Ende des Lichtwellenleiters (9) und dem Lichtempfangsteil (16) ein bevorzugt trichterförmiger Lichtverteilungsraum (20) ausgebildet ist.

14. Signalübertragungsleitung nach einem der voranstehenden Ansprüche, dadurch gekennzeichnet, daß an dem Licht abstrahlenden Ende des Lichtwellenleiters (9) ein optisches Element, insbesondere eine Linse (21), vorgesehen ist.

15. Signalübertragungsleitung nach einem der voranstehenden Ansprüche, dadurch gekennzeichnet, daß an dem Licht abstrahlenden Ende des Lichtwellenleiters (9) ein Farben trennendes optisches Element, insbesondere ein Prisma, zur räumlichen Aufteilung des Lichts vorgesehen ist.

16. Signalübertragungsleitung nach Anspruch 15, dadurch gekennzeichnet, daß von dem Prisma zu den verschiedenen Lichtempfangsteilen (16) führende Lichtwellenleiterzwischenstücke vorgesehen sind.

17. Signalübertragungsleitung nach einem der voranstehenden Ansprüche, dadurch gekennzeichnet, daß die Lichtempfangsteile (16) in dem Anschlußelement (4, 6) verschiedene optische Filter (19) aufweisen.

18. Signalübertragungsleitung nach einem der voranstehenden Ansprüche, dadurch gekennzeichnet, daß in dem Anschlußelement (6) mindestens zwei Lichtabgabeteile (11) und mindestens zwei Lichtempfangsteile (16) sowie ein Mischerteil vorgesehen sind, welch letzteres an dem Lichtwellenleiter (9) angeschlossen ist, und daß mindestens zwei an dem Mischerteil (22) angeschlossene Lichtwellenleiterzwischenstücke (17) vorgesehen sind, von denen das eine den Lichtempfangsteilen (16) und das andere den Lichtabgabeteilen zugeordnet ist.

19. Signalübertragungsleitung nach Anspruch 18, dadurch gekennzeichnet, daß das den Lichtabgabeteilen (11) zugeordnete Lichtwellenleiterzwischenstück (17) an einem optischen Kopplungselement (18) angeschlossen ist, das über weitere Lichtwellenleiterzwischenstücke (17) mit den Lichtabgabeteilen (11) verbunden ist.

20. Signalübertragungsleitung nach einem der voranstehenden Ansprüche, dadurch gekennzeichnet, daß an jedem der Enden des Lichtwellenleiters (9) Anschlußelemente in Form von Kupplungsteilen (1 bis 6) vorgesehen sind.

21. Signalübertragungsleitung nach einem der voranstehenden Ansprüche, dadurch gekennzeichnet, daß das Licht mit unterschiedlicher Wellenlänge (Farbe) und/oder unterschiedlicher Intensität übertragbar ist.

22. Signalübertragungsleitung nach einem der voranstehenden Ansprüche, dadurch gekennzeichnet, daß das Licht mit unterschiedlicher Wellenlänge (Farbe) und/oder unterschiedlicher Intensität wahlweise kontinuierlich oder gepulst übertragbar ist.

## Claims

1. Optoelectronically operating signal transmission line for transmitting, for example, control, regulating and monitoring signals between units of a technical device, comprising a connection element (1 to 6) detachable from the units and having electrical connections (12) detachable from these units and serving to provide a detachable connection between the signal transmission line and one of said units, a light waveguide leading away from this connection element for transmitting optical information, said light waveguide being encased individually or as a fiber bundle so as to be light-tight, a transformation unit (11, 16) arranged in the connection element (1 to 6) between the electrical connection (12) and the light waveguide (9) for converting electrical signals into optical signals and vice versa, wherein the connection element (1 to 6) keeps the electrical connection (12), the transformation unit (11, 16) and the light waveguide (9) firmly connected to one another, characterized in that the light waveguide is a polymeric light waveguide (9) and that the light waveguide (9) and the transformation unit (11, 16) arranged in the connection element (1 to 6) as well as the electrical connections (12) are arranged in a common hermetic sheath (7) made from a light-tight, gas-tight, vapour-proof and liquid-proof, rubber-elastic or toughened elastic material so as to be resistant to vibrations.

2. Signal transmission line as defined in claim 1, characterized in that the electrical connections are designed as electrical connector pins (12) or plug jacks.

3. Signal transmission line as defined in either of the preceding claims, characterized in that the transformation unit comprises a light emission member (11) and/or a light receiving member (16).

4. Signal transmission line as defined in any of the preceding claims, characterized in that electrical conductors (13) are provided between the electrical connections (12) and the transformation unit (11, 16), the ends of said conductors being securely connected with the aforesaid elements and embedded in the sheath so as to be hermetically sealed.

5. Signal transmission line as defined in any of the preceding claims, characterized in that the connection element is designed as an electrical coupling member (1 to 6).

6. Signal transmission line as defined in any of the preceding claims, characterized in that the electrical connections (12) are led out of the hermetically sealed sheath (7) and are designed as rectangular connector tongues and/or plug jacks preferably flat in cross section.

7. Signal transmission line as defined in any of the preceding claims, characterized in that the signal transmission line comprises two or more light waveguides (9).

8. Signal transmission line as defined in any of the preceding claims, characterized in that the signal transmission line is provided with two coupling members (1 to 6) and that the light emission member (11) is arranged in the one coupling member (1, 3) at one end of the transmission member (8) and the light receiving member (16) in the coupling member (2, 4) at the other end of the signal transmission line.

9. Signal transmission line as defined in claim 8, characterized in that a light emission member (11) and a light receiving member (16) are arranged in each of the two coupling members (1, 2).

10. Signal transmission line as defined in any of the preceding claims, characterized in that a mixer member (22) is arranged in the connection element (5), the light waveguide (9) and a light waveguide intermediate member (17) joined to the light emission member (11) as well as a light waveguide intermediate member (17) joined to the light receiving member (16) being connected to said mixer member.

11. Signal transmission line as defined in any of the preceding claims, characterized in that two or more light emission members (11) are provided in the connection element, each of said members having a light waveguide intermediate member (17) leading to the mixer member (22) connected to the light waveguide (9).

12. Signal transmission line as defined in any of the preceding claims, characterized in that two or more light receiving members (16) are arranged in the connection element (4).

13. Signal transmission line as defined in any of the preceding claims, characterized in that a preferably funnel-shaped light distribution chamber (20) is formed between the light-emitting end of the light waveguide (9) and the light receiving member (16).

14. Signal transmission line as defined in any of the preceding claims, characterized in that an optical element, in particular a lens (21), is provided at the light-emitting end of the light waveguide (9).

15. Signal transmission line as defined in any of the preceding claims, characterized in that a colour-separating optical element, in particular a prism, is provided at the light-emitting end of the light waveguide (9) for spatial distribution of the light.

16. Signal transmission line as defined in claim 15, characterized in that light waveguide intermediate members leading from the prism to the various light receiving members (16) are provided.

17. Signal transmission line as defined in any of the preceding claims, characterized in that the light receiving members (16) in the connection element (4, 6) comprise various optical filters (19).

18. Signal transmission line as defined in any of the preceding claims, characterized in that at least two light emission members (11) and at least two light receiving members (16) as well as one mixer member are provided in the connection element (6), said mixer member being connected to the light waveguide (9), and that at least two light waveguide intermediate members (17) connected to the mixer member (22) are provided, one of said intermediate members being associated with the light receiving members (16) and the other with the light emission members.

19. Signal transmission line as defined in claim 18, characterized in that the light waveguide intermediate member (17) associated with the light emission members (11) is connected to an optical coupling element (18), said element being connected via additional light waveguide intermediate members (17) with the light emission members (11).

20. Signal transmission line as defined in any of the preceding claims, characterized in that connection elements in the form of coupling members (1 to 6) are provided at each of the ends of the light waveguide (9).

21. Signal transmission line as defined in any of the preceding claims, characterized in that the light is adapted to be transmitted with a differing wave length (colour) and/or a differing intensity.

22. Signal transmission line as defined in any of the preceding claims, characterized in that the light is adapted to be transmitted with a differing wave length (colour) and/or a differing intensity either continuously or pulsed.

## Revendications

1. Câble de transmission de signaux du type optoélectronique pour la transmission de signaux, par exemple de commande, de régulation et de surveillance entre des unités d'un dispositif technique, comprenant un élément de raccordement (1 à 6) pouvant être déconnecté des unités, qui présente des connexions électriques (12) pouvant être déconnectées de ces unités, qui servent à établir une liaison déconnectable entre le câble de transmission de signaux et l'une des unités, un guide d'ondes lumineuses partant de cet élément de raccordement pour la transmission optique des informations, qui est entouré d'un revêtement étanche à la lumière qui enrobe, soit chaque guide individuel, soit le faisceau de fibres, une unité de transformation disposée dans l'élément de raccordement (1 à 6) entre la connnexion électrique (12) et le guide d'ondes lumineuses (9), pour transformer des signaux électriques en signaux optiques et inversement, l'élément de raccordement (1 à 6) maintenant la connexion électrique (12), l'unité de transformation (11 , 16) et le guide d'ondes lumineuses (9) rigidement assemblés entre eux,
caractérisée en ce que
le guide d'ondes lumineuses est un guide d'ondes lumineuses (9) fait de polymère et en ce que le guide d'ondes lumineuses (9) et l'unité de transformation (11, 16) disposée dans l'élément de raccordement (1 à 6) ainsi que les connexions électriques (12) sont montés de façon résistante aux vibrations dans un revêtement (7) commun hermétique fait d'une matière étanche à la lumière, aux gaz, aux vapeurs et aux liquides, et élastique comme le caoutchouc ou viscoélastique.

2. Câble de transmission de signaux selon la revendication 1, caractérisée en ce que les connexions électriques sont constituées par des broches électriques mâles (12) ou femelles.

3. Câble de transmission de signaux selon une des revendications précédentes, caractérisée en ce que l'unité de transformation comprend une partie (11) d'émission de lumière et/ou une partie (16) de réception de lumière.

4. Câble de transmission de signaux selon une des revendications précédentes, caractérisée en ce qu'entre les connexions électriques (12) et l'unité de transformation (11, 16), sont prévus des conducteurs électriques (13) dont les extrémités sont reliées rigidement aux éléments précités et sont noyées hermétiquement dans le revêtement.

5. Câble de transmission de signaux selon une des revendications précédentes, caractérisée en ce que l'élément de raccordement est constitué par une partie d'accouplement électrique (1 à 6).

6. Câble de transmission de signaux selon une des revendications précédentes, caractérisée en ce que les connexions électriques (12) émergent du revêtement hermétiquement étanche (7) et sont constituées par des broches mâles et/ou broches femelles qui sont de préférence de forme rectangulaire aplatie en section transversale.

7. Câble de transmission de signaux selon une des revendications précédentes, caractérisée en ce que le câble de transmission de signaux présente deux ou plus de deux conducteurs d'ondes lumineuses (9).

8. Câble de transmission de signaux selon une des revendications précédentes, caractérisé en ce que le câble de transmission de signaux est muni de deux parties d'accouplement (1 à 6) et en ce que la partie (11) d'émission de lumière est disposée dans l'une des parties d'accouplement (1, 3) à une extrémité de la partie de transmission (8), et la partie (16) de réception de lumière est disposée dans la partie d'accouplement (2, 4) située à l'autre extrémité du câble de transmission de signaux.

9. Câble de transmission de signaux selon la revendication 8, caractérisée en ce qu'une partie (11) d'émission de lumière et une partie (16) de réception de lumière sont disposées respectivement dans les deux parties d'accouplement (1, 2).

10. Câble de transmission de signaux selon une des revendications précédentes, caractérisée en ce que, dans l'élément de raccordement (5), est disposée une partie mélangeuse (22) à laquelle sont raccordés le guide d'ondes lumineuses (9) et un raccord (17) de guide d'ondes lumineuses relié à la partie (11) d'émission de lumière ainsi qu'un raccord (17) de guide d'ondes lumineuses relié à la partie (16) de réception de lumière.

11. Câble de transmission de signaux selon une des revendications précédentes, caractérisée en ce que, dans l'élément de raccordement, sont prévues deux ou plus de deux parties (11) d'émission de lumière comprenant chacune un raccord (17) de guide d'ondes lumineuses qui mène à la partie mélangeuse (22) reliée au guide d'ondes lumineuses (9).

12. Câble de transmission de signaux selon une des revendications précédentes, caractérisée en ce que deux ou plus de deux parties (16) de réception de lumière sont disposées dans l'élément de raccordement (4).

13. Câble de transmission de signaux selon une des revendications précédentes, caractérisée en ce qu'une chambre (20) de distribution de lumière, de préférence en forme d'entonnoir, est formée entre l'extrémité du guide d'ondes lumineuses (9) qui rayonne la lumière et la partie (16) de réception de la lumière.

14. Câble de transmission de signaux selon une des revendications précédentes, caractérisé en ce qu'il est prévu un élément optique, en particulier une lentille (21) à l'extrémité du guide d'ondes lumineuses (9) qui rayonne la lumière.

15. Câble de transmission de signaux selon une des revendications précédentes, caractérisée en ce qu'un élément optique séparant les couleurs, notamment un prisme, est prévu à l'extrémité du guide d'ondes lumineuses (9) qui rayonne la lumière, pour assurer une distribution de la lumière dans l'espace.

16. Câble de transmission de signaux selon la revendication 15, caractérisée en ce qu'il est prévu des raccords de guides d'ondes lumineuses qui mènent du prisme aux différentes parties (16) de réception de lumière.

17. Câble de transmission de signaux selon une des revendications précédentes, caractérisée en ce que les parties (16) de réception de lumière contenues dans l'élément de raccordement (4, 6) présentent différents filtres optiques (19).

18. Câble de transmission de signaux selon une des revendications précédentes, caractérisée en ce qu'il est prévu, dans l'élément de raccordement (6), au moins deux parties (11) d'émission de lumière et au moins deux parties (16) de réception de lumière ainsi qu'une partie mélangeuse qui est raccordée au guide d'ondes lumineuses (9), et en ce qu'il est prévu au moins deux raccords (17) de guide d'ondes lumineuses raccordés à la partie mélangeuse (22), dont l'un est associé aux parties (16) de réception de lumière et l'autre aux parties d'émission de lumière.

19. Câble de transmission de signaux selon la revendication 18, caractérisée en ce que le raccord (17) de guide d'ondes lumineuses associé aux parties (11) d'émission de lumière est connecté à un élément de couplage optique (18) qui est relié aux parties (11) d'émission de lumière par l'intermédiaire d'autres raccords (17) de guide d'ondes lumineuses.

20. Câble de transmission de signaux selon une des revendications précédentes, caractérisée en ce qu'à chacune des extrémités du guide d'ondes lumineuses (9), sont prévus des éléments de raccordement constitués par des parties d'accouplement (1 à 6).

21. Câble de transmission de signaux selon une des revendications précédentes, caractérisée en ce que la lumière peut être transmise en différentes longueurs d'onde (couleurs) et/ou avec différentes intensités.

22. Câble de transmission de signaux selon une des revendications précédentes, caractérisée en ce que la lumière peut être transmise avec différentes longueurs d'onde (couleurs) et/ou différentes intensités, sélectivement de façon continue ou pulsée.
